Europäisches Patentamt

European Patent Office

Office européen des brevets

(11) Veröffentlichungsnummer: **0 281 677**
**A2**

(12) **EUROPÄISCHE PATENTANMELDUNG**

(21) Anmeldenummer: 87118237.4

(22) Anmeldetag: 09.12.87

(51) Int. Cl.4: **G09G 1/16**

(30) Priorität: 09.03.87 DE 3707490

(43) Veröffentlichungstag der Anmeldung:
14.09.88 Patentblatt 88/37

(84) Benannte Vertragsstaaten:
AT DE FR GB IT NL SE

(71) Anmelder: **Siemens Aktiengesellschaft Berlin und München**
**Wittelsbacherplatz 2**
**D-8000 München 2(DE)**

(72) Erfinder: **Charwat, Hans Jürgen**
**Kärcherstrasse 46**
**D-7500 Karlsruhe 21(DE)**

(54) **Anordnung zum gleichzeitigen Darstellen von mehreren Bildern auf dem Bildschirm eines Sichtgerätes.**

(57) Eine Fenstereinstellmarke (FM1) wird auf den Grenzlinien (BL1, BL2) von aneinander grenzenden Fenstern (FE1, ... FE4) dargestellt. Sie ist mittels eines Bedienelementes verschiebbar. Mit dem Verschieben der Marke werden auch die Grenzlinien verschoben.

Hauptanwendungsgebiet der Erfindung sind Prozeßsichtgeräte.

FIG 1

EP 0 281 677 A2

# Anordnung zum gleichzeitigen Darstellen von mehreren Bildern auf dem Bildschirm eines Sichtgerätes

Die Erfindung betrifft eine Anordnung zum Darstellen von mehreren Bildern auf dem Bildschirm eines Sichtgerätes in je einem Fenster gemäß dem Oberbegriff des Anspruchs 1.

Aus der DE-PS 28 36 500 ist ein Sichtgerät bekannt, mit dem in das dargestellte Bild Graphiken eingeblendet werden können. Hierzu sind Fenster vorgesehen, deren Lage und Größe durch den Inhalt von Fensterspeichern bestimmt wird.

In der Zeitschrift "micro" 10/85, Seiten 70 bis 79 sind zwei Verfahren zum gleichzeitigen Darstellen von mehreren Bildern auf dem Bildschirm eines Sichtgerätes beschrieben. Bei dem einen liegen die Bilder nach Art von Blättern übereinander. d. h., sie verdecken sich zumindest teilweise, so daß u. U. Veränderungen wie Meldungen von der Bedienungsperson nicht bemerkt werden können. Bei nur teilweiser Abdeckung der Bilder ist für das oberste Bild nicht der gesamte Bildschirm nutzbar. Nach dem zweiten Darstellungsverfahren werden die Bilder auf dem Bildschirm nach Art von Kacheln aneinandergefügt. Dabei werden keine Bildteile verdeckt. Ein Verschieben der Bilder ist nicht möglich; sie können lediglich für weitere Bilder unterteilt werden, oder es werden zum Vergrößern eines Bildes zwei oder mehr Kacheln zu einer zusammengefaßt. Nicht dargestellte Bilder werden symbolisch am Bildrand vermerkt. Die einzelnen Bilder können vergrößert, verkleinert oder innerhalb des Fensters verschoben werden.

Der vorliegenden Erfindung liegt die Aufgabe zugrunde, ein Sichtgerät zu schaffen, mit dem das Eintreten von Ereignissen jederzeit angezeigt wird und dessen Bedienung, d. h. Auswahl des anzuzeigenden Bildes und des Bildausschnittes schnell und in wenigen Schritten erfolgt, so daß es auch in Streßsituationen sicher bedient werden kann.

Erfindungsgemäß wird diese Aufgabe mit den im kennzeichnenden Teil des Anspruchs 1 angegebenen Maßnahmen gelöst.

Im einfachsten Fall sind auf dem Bildschirm nur zwei Bilder in zwei Fenstern dargestellt, die durch eine vertikale oder horizontale Grenzlinie voneinander getrennt sind. Durch Anwählen der auf der Grenzlinie liegenden Fenstereinstellmarke, z. B. mit einem von einem Steuerknüppel gesteuerten Cursor und durch anschließendes Verschieben des Cursors wird die Fenstereinstellmarke und mit ihr die Grenzlinie verschoben, so daß das eine Fenster auf Kosten des anderen vergrößert wird. Der Fensterinhalt kann dabei stehen bleiben, so daß an der Grenzlinie in dem einen Bild neue Bildbestandteile erscheinen und in dem anderen Bild bisher dargestellte Bestandteile verschwinden. Die Bilder können auch mit der Grenzlinie verschoben werden, so daß Bildteile am Bildschirmrand erscheinen bzw. verschwinden.

Es können auch mehr als zwei Fenster auf dem Bildschirm dargestellt werden. Beispielsweise kann der Bildschirm oder ein rechtwinkliger Teil davon in vier Fenster unterteilt sein, und zwar mit Begrenzungslinien, die in Zeilenrichtung des Sichtgerätes und senkrecht dazu verlaufen. Auf dem Schnittpunkt der Begrenzungslinien wird die Fenstereinstellmarke dargestellt. Wird sie verschoben, ändern sich je nach Verschieberichtung die Lagen der Begrenzungslinien und damit auch die Größe und Lage der Fenster. Die Mittel zum Darstellen und Verschieben der Fenstereinstellmarke sowie zum Verschieben der Begrenzungslinien sind an sich bekannt. Innerhalb der Fenster können die bekannten Bildänderungen, wie Vergrößern, Verkleinern, Verschieben, vorgenommen werden.

Anhand der Zeichnung werden im folgenden die Erfindung sowie Weiterbildungen und Ergänzungen näher beschrieben und erläutert.

Es zeigen

die Figuren 1 bis 3 einen Bildschirm, der von einer Fenstereinstellmarke in vier Fenster unterteilt ist,

die Figuren 4 bis 7 verschiedene Ausführungen von Fenstereinstellmarken,

Figur 8 einen Bildschirm mit zwei festen Bereichen und einer Fenstereinstellmarke für drei Fenster,

die Figuren 9 und 10 Bildschirme mit zwei Fenstereinstellmarken,

die Figuren 11 bis 13 Bildschirme mit Fenstern, deren Begrenzungslinien weder in Zeilenrichtung noch senkrecht dazu verlaufen,

Figur 14 das Prinzipschaltbild eines Ausführungsbeispiels.

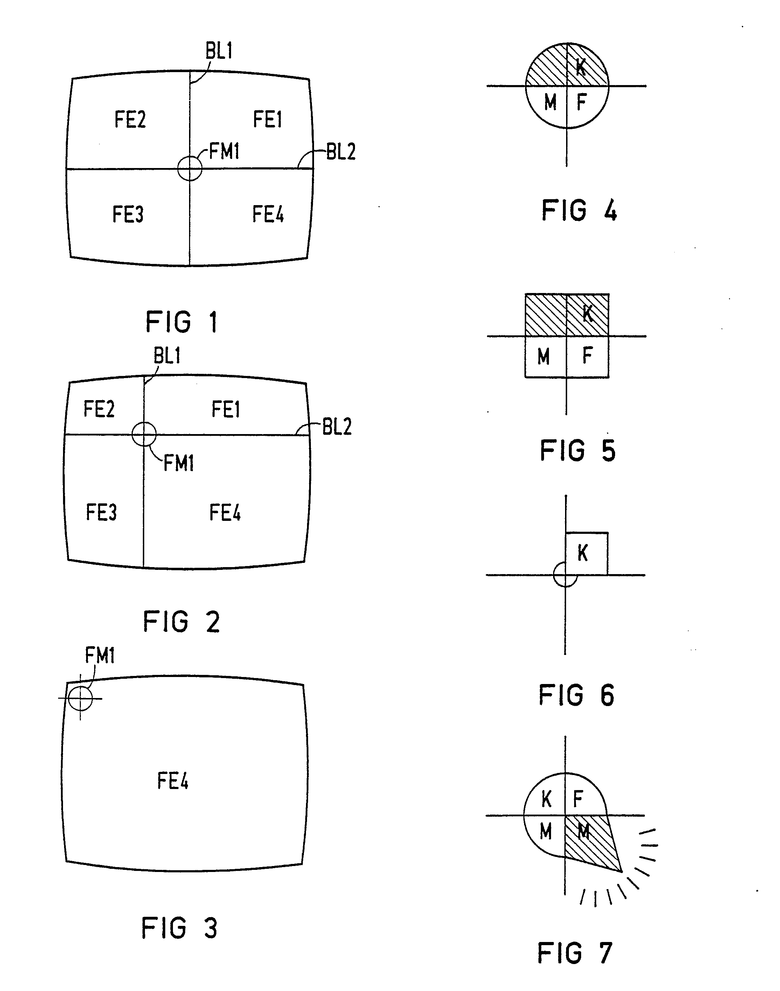

Figur 1 zeigt den Bildschirm eines Sichtgerätes, der von Fensterbegrenzungslinien BL1, BL2, die in Zeilenrichtung des Sichtgerätes und senkrecht dazu verlaufen, in vier rechteckige Fenster FE1, FE2, FE3, FE4 unterteilt. An ihrem Schnittpunkt ist eine Fenstereinstellmarke FM1 als Kreis oder Ring dargestellt; sie bestimmt durch ihre Lage die Aufteilung des Bildschirms in die vier Fenster. Die Daten der Bilder, die in den Fenstern dargestellt werden, sind in einem Bildspeicher enthalten. Der Einfachheit halber sei zunächst angenommen, daß jedes Bild die Größe des gesamten Bildschirmes hat und die Daten eines jeden Bildes in einem gesonderten Bildspeicher enthalten sind. Die Bilder werden in den einzelnen Fenstern mit unterschiedlicher Priorität dargestellt, so daß dort jeweils das Bild mit der höchsten Priorität die anderen Bilder verdeckt. Da die Fenster Quadranten eines kartesischen Koordinatensystems mit der Fenstermarke als Ursprung sind, können die Prioritätsbedingungen einfach durch Vergleich der jeweiligen Bildschirmkoordinate mit den Koordinaten der Fenstermarke bestimmt werden. Ebenso einfach können die Begrenzungslinien BL1, BL2 gebildet werden. Im Falle, daß die Bilder mit der Marke verschoben werden, werden die Bildspeicher in Abhängigkeit der Koordinaten der Marke so ausgelesen, daß sie in der gewünschten Weise in den Fenstern erscheinen. Die hierzu erforderlichen Mittel und Verfahren sind an sich bekannt und brauchen hier nicht beschrieben zu werden.

Die Fenstereinstellmarke ist mittels einer Bedieneinheit, z. B. einer Maus, eines Steuerknüppels oder im Falle eines berührungsempfindlichen Bildschirms, mit dem Finger anwählbar und kann über den Bildschirm verschoben werden. Da ihre Bildschirmkoordinaten den Punkt bestimmen, in dem die vier Fenster aneinanderstoßen, verschieben sich mit ihr die Begrenzungslinien BL1, BL2 der Fenster, wie es in Figur 2 veranschaulicht ist. Befindet sich die Marke am Rand des Bildschirms, ist dieser in zwei Fenster unterteilt.

Wenn, wie in Figur 3 gezeigt, die Fenstereinstellmarke in eine Bildschirmecke verschoben ist, steht der Gesamtbildschirm als ein Fenster zur Verfügung. Die Marke bleibt sichtbar. Innerhalb der Fenster können die Bilder vergrößert oder verkleinert oder, falls das Bild größer als das Fenster ist, das Bild hinter dem Fenster verschoben werden.

Wie schon erwähnt, besteht die Fenstereinstellmarke aus mehreren Bildpunkten. Zweckmäßig enthält sie in jedem angrenzenden Fenster mindestens ein Zeichenfeld, damit in der Marke die Fenster betreffende Informationen angezeigt werden können. In Figur 4 ist eine kreisförmige Marke dargestellt, deren vier, durch die Fensterbegrenzungslinien erzeugten Sektoren in je einem Fenster liegen. Mit Buchstaben K, M, F wird angezeigt, ob in dem jeweiligen Fenster Kurven, Meldungen oder ein Fließbild dargestellt wird. Im vierten Fenster wird kein Bild wiedergegeben. Selbstverständlich ist auch eine andere Belegung der Fenster, z. B. mit Listen, Graphiken, möglich.

Anstatt einer kreisförmigen Marke kann auch eine viereckige verwendet werden, wie in Figur 5 gezeigt.

Figur 6 zeigt ein Beispiel für eine Fenstermarke, die zur Anzeige, daß im ersten Quadranten Kurven dargestellt werden, in diesem Quadranten ein Quadrat aufweist, in das ein K eingetragen ist. Die übrigen drei Fenster enthalten kein Bild; die Marke besteht in diesen Fenstern aus im Vergleich zum Quadrat kleineren Sektoren.

Die Möglichkeit, den in einem Fenster liegenden Teil der Fenstereinstellmarke durch Blinken, Farbe oder Größe hervorzuheben, kann wirkungsvoll genutzt werden, um auf wichtige, in dem zugehörigen Fenster angezeigte Ereignisse, z. B. Alarmmeldungen, aufmerksam zu machen. Figur 7 zeigt hierzu ein Beispiel. Dies ist vor allem dann von Bedeutung, wenn der Teil eines Bildes, in dem das Ereignis angezeigt wird, momentan nicht auf dem Bildschirm dargestellt wird, z. B. wenn, wie in Figur 3, die Fenstereinstellmarke in eine Ecke des Bildschirmes verschoben ist und der Bildschirm nur für ein Fenster zur Verfügung steht. Meldungen aus einem anderen Fenster werden dann nicht unmittelbar angezeigt; es wird aber auf sie hingewiesen, indem das entsprechende Feld der Fenstermarke auffällig dargestellt wird. Durch Verschieben der Fenstermarke kann das Bild, in dem die Meldung erfolgt, auf dem Bildschirm zur Darstellung gebracht werden.

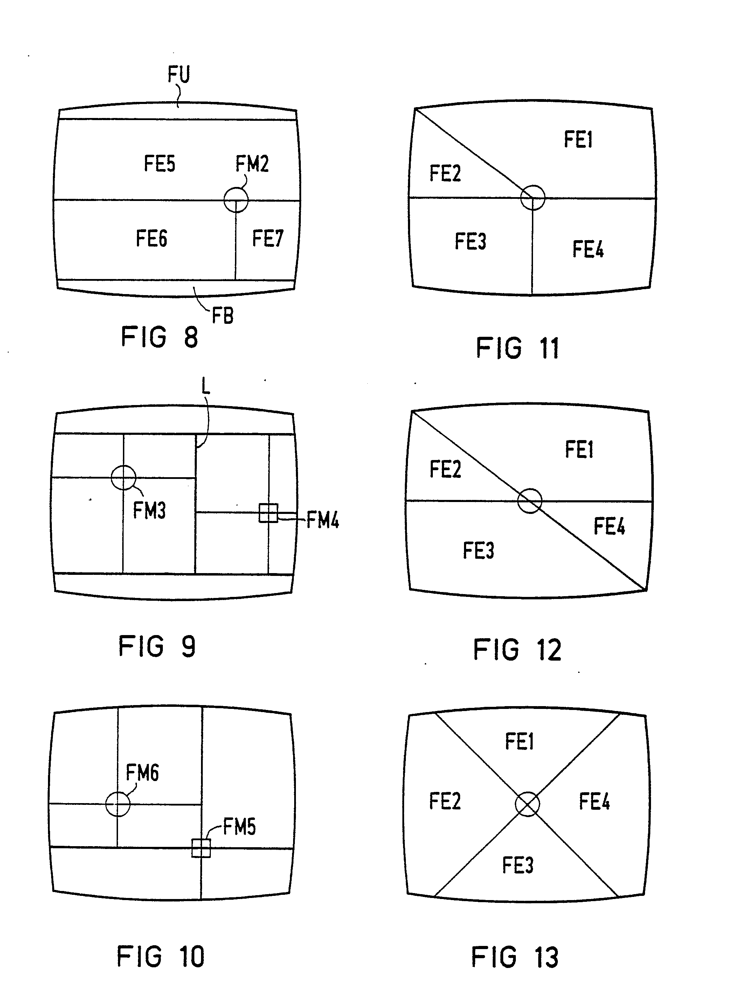

Figur 8 zeigt ein Beispiel für die Einteilung eines Bildschirms, bei der die Fenster nicht den gesamten Bildschirm überdecken. Es sind zusätzlich feste Felder vorgesehen, und zwar ein Feld FU für eine Übersichtsdarstellung und ein Feld FB für eine virtuelle Tastatur. Ferner ist der Fall veranschaulicht, bei dem eine Fenstermarke FM2 nicht die aneinanderstoßenden Ecken von vier Fenstern bildet und damit deren Lage und Größe bestimmt, sondern ein Fenster FE5 erstreckt sich über die gesamte Breite des Bildschirms. Zwei weitere, durch eine senk rechte Begrenzungslinie voneinander getrennte Fenster nehmen den restlichen Teil der für die Fenster vorbehaltenen Fläche des Bildschirms ein. Die Fenstermarke FM2 liegt auf dem Verbindungspunkt der Begrenzungslinie der drei Fenster. Auch er bestimmt Lage und Größe der Fenster. Wird er nach rechts oder links verschoben, wird das Fenster FE6 auf Kosten des Fensters FE7 vergrößert oder umgekehrt. Bei Verschieben in vertikaler Richtung verschiebt sich die untere Begrenzungslinie des Fensters FE5. Entsprechend können auch drei Fenster vorgesehen sein, von denen eines sich über die gesamte Höhe der für die Fenster vorgesehenen Fläche erstreckt und die restliche Fläche in zwei Fenster aufgeteilt ist, die durch eine waagerechte Begrenzungslinie voneinander getrennt sind. Die Fenstereinstellmarke befindet sich in diesem Falle an der Stelle, an der die waagrechte Begrenzungslinie auf die vertikale trifft.

Als Sonderfall wird erwähnt, daß nur zwei Fenster vorgesehen sind, die durch Unterteilung des Bildschirms oder eines Teils davon durch eine horizontale oder eine vertikale Linie gebildet sind. Die Fenstereinstellmarke liegt in diesem Falle auf dieser Linie, die mit dem der Marke verschoben wird.

Figur 9 zeigt eine Ausgestaltung mit zwei Fenstereinstellmarken. Der für die Fenster vorbehaltene Bildschirmbereich ist durch eine Linie L in zwei feste Bereiche unterteilt, die von je einer Marke FM3, FM4 jeweils in bis zu vier Fenster unterteilt sind. Innerhalb der festen Bereiche können die Fenster, wie anhand der Figuren 1 bis 3 beschrieben, verändert werden.

Auf dem in Figur 10 dargestellten Bildschirm ist innerhalb eines von vier durch eine Fenstereinstellmarke FM5 gebildeten Fensters eine zweite Fenstereinstellmarke FM6 enthalten, der das erste Fenster in Figur 4 weitere unterteilt. Es sind somit insgesamt sieben Fenster erzeugt.

In den bisher beschriebenen Beispielen waren die Fenster rechteckförmig, und die Begrenzungslinien verliefen in Zeilenrichtung und senkrecht dazu. Es sind jedoch auch andere Fensterformen möglich, wie in den Figuren 11 bis 13 gezeigt. Darüber hinaus können durch Umfahren der Fenstereinstellmarke mit einem Cursor die Begrenzungslinien um die Marke einzeln oder gemeinsam geschwenkt werden.

Innerhalb der Fenster können die üblichen Funktionen, wie Bildrollen, Vergrößern, Verkleinern, für jedes Bild getrennt oder für alle Bilder gemeinsam durchgeführt werden. Zweckmäßig ist jedem Fenster ein eigener Speicher oder Speicherbereich zugeordnet, so daß die Bilder unabhängig voneinander aktualisiert und bedient werden können.

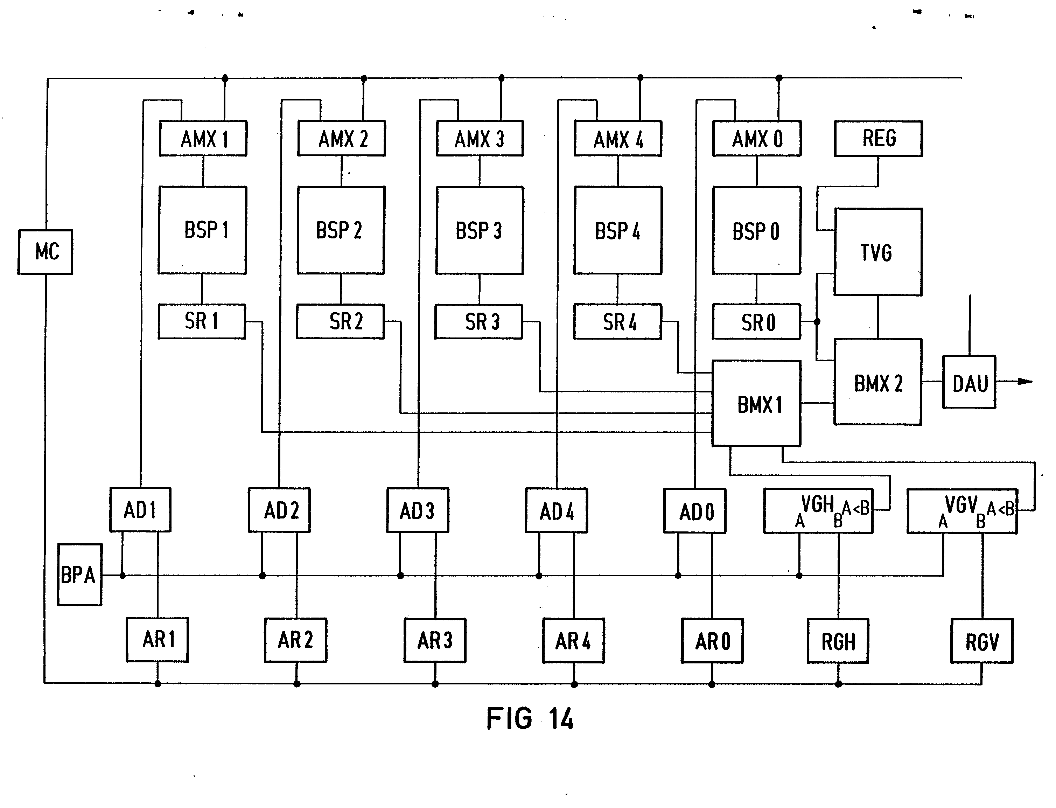

Die Anordnung nach Figur 14 ermöglicht die in den Figuren 1 bis 3 veranschaulichte Bildschirmaufteilung. Sie enthält vier Bildspeicher BS1, BS2, BS3, BS4, in denen die Informationen für je ein Fenster gespeichert sind. Die im Speicher BS1 enthaltene Information wird z. B. im Fenster FE1, die Information des Speichers BS2 im Fenster FE2 dargestellt und so fort. In einem fünften Speicher BS0 sind die zur Darstellung der Fenstereinstellmarke erforderlichen Informationen gespeichert. Die Ausgänge der Speicher bilden zur Parallel-Serienumwandlung Schieberegister SR1, SR2 ... SR0. Den Adresseneingängen der Speicher sind Adressenmultiplexer AMX0, AMX1 ... AMX4 vorgeschaltet, die zum Einschreiben neuer Informationen in die Bildspeicher Adressen von einem Rechner MC und zum Darstellen der gespeicherten Bildinformationen Adressen von Addierern AD1 ... AD4, AD0 zu den Adresseneingängen der Bildspeicher durchschalten. Die Addierer bilden jeweils die Summe aus einer in einem Adressenregister AR1, AR2 ... AR0 enthaltenen Anfangsadresse und eine i : ainem Bildpunkt-Adressengenerator BPA erzeugten Bildpunktadresse. Diese gibt an, welcher Bildpunkt auf dem Bildschirm des nach dem Zeilenrasterverfahren arbeitenden Sichtgerätes gerade dargestellt wird. Durch Addition der Anfangsadressen, die vom Rechner MC in die Adressenregister geladen werden, werden die Bilder auf dem Bildschirm um einen der Anfangsadresse entsprechenden Betrag verschoben. In zwei weiteren Registern RGH, RGV wird die Bildpunktzeile bzw. die Spalte eingetragen, an welcher der Bildschirm horizontal bzw. vertikal in die Fenster unterteilt wird. Vergleicher VGH, VGV stellen durch Vergleich der Inhalte der Register RGH, RGV mit der jeweiligen Bildpunktadresse fest, in welchem Fenster der gerade dargestellte Bildpunkt liegt. Dazu genügt es, dem Vergleicher VGH den Teil der Bildpunktadressen zuzuführen, welche die Bildpunktlagen innerhalb der Zeilen angeben, und dem Vergleicher VGV den die Zeilen bezeichnenden Teil. Mit den Ausgangssignalen der Vergleicher VGH, VGV wird ein erster Bildmultiplexer BMX1 derart gesteuert, daß jeweils die Bildinformation aus dem Bildspeicher durchgeschaltet wird, der dem gerade dargestellten Fenster zugeordnet ist. Die Ausgangssignale des ersten Bildmultiplexer BMX1 sind einem zweiten Bildmultiplexer BMX2 zugeführt, der ferner die Bildinformation aus dem Bildspeicher BS0 enthält. Seine Ausgangssignale setzt ein Digital-Analog-Umsetzer DAU in zur Ansteuerung eines Rastersichtgerätes geeignete Videosignale um. Die Informationen aus dem Bildspeicher BS0 bestehen aus Informationen zur Darstellung der Fenstereinstellmarke und aus sogenannten Transparentwerten. Deren Auftreten überwacht ein Vergleicher TVG, der die Ausgangssignale des Bildspeichers BS0 mit dem Inhalt eines Registers REG vergleicht, in welchem der Transparentwert abgespeichert ist. Gibt der Bildspeicher BS0 einen Transparentwert ab, stellt der Vergleicher TVG Übereinstimmung mit dem im Register REG enthaltenen Wert fest und steuert den zweiten Bildmultiplexer BMX2 in die Schaltstellung, in welcher die Ausgangssignale des ersten Bildmultiplexers BMX1 zu einem Digital-Analog-Umsetzer DAU durchgeschaltet werden, so daß die Inhalte der Bildspeicher BS1 ... BS4 dargestellt werden. Andernfalls werden die Signale des Bildspeichers BS0 durchgesschaltet und die Fenstereinstellmarke dargestellt.

Mit einem nicht dargestellten Bedienelement, z. B. einer sogenannten Maus, kann die Fenstereinstellmarke verschoben werden. Hierzu werden der Mausverschiebung entsprechende Koordinaten in den Rechner MC eingegeben, der dann zumindest die Inhalte der Register AR0, RGH, RGV entsprechend verändert. Damit werden die Fenstereinstellmarke und die Fenstergrenzen verschoben. Je nach dem, ob die in den Fenstern dargestellten Bilder mit verschoben werden sollen oder nicht, werden auch die Inhalte der Adressenregister AR1 ... AR4 verändert oder nicht. Diese Register können auch für die üblichen Bildmanipulationen, wie Zoom, Rollen, in bekannter Weise benutzt werden, so daß diese Manipulationen in den einzelnen Fenstern getrennt ausgeführt werden können.

Anstatt wie im Ausführungsbeispiel den ersten Bildmultiplexer BMX1 durch die Vergleicher VGH, VGV zu steuern, kann dies auch mit dem Inhalt des Bildspeichers BS0 geschehen. In diesem Falle werden im Bildspeicher BS0 nicht nur die Informationen zur Darstellungen der Fenstereinstellmarke und die Transparentwerte eingetragen, sondern auch Informationen über die Lage der Fenster relativ zur Marke, indem je Bildpunkt ein ein Fenster angebender Code eingetragen wird. Damit sind Anzahl, Form und Lage der Fenster praktisch beliebig wählbar. Auf den zweiten Bildmultiplexer BMX2 kann in einer solchen Anordnung verzichtet werden.

## Ansprüche

1. Anordnung zum Darstellen von mehreren Bildern auf dem Bildschirm eines Sichtgerätes in je einem Fenster mit einem Bildspeicher, in dem die Daten der Bilder gespeichert sind und mit einem Bedienelement, mit dem die Bilder hinsichtlich ihrer Größe und Lage auf dem Bildschirm einstellbar sind, **gekennzeichnet durch** eine Fenstereinstellmarke (FM1), die auf den Grenzlinien (BL1, BL2) von aneinander angrenzenden Fenstern (FE1, FE2, FE3, FE4) dargestellt ist und die mittels des Bedienelementes verschiebbar ist, wobei die Grenzlinien mit verschoben werden.

2. Anordnung nach Anspruch 1, **dadurch gekennzeichnet**, daß die Begrenzungslinien (BL1, BL2) der Fenster (FE1, ... FE4) in Zeilenrichtung und senkrecht dazu verlaufen.

3. Anordnung nach Anspruch 1 oder 2, **dadurch gekennzeichnet**, daß die Fenstereinstellmarke am Schnittpunkt von Fensterbegrenzungslinien dargestellt ist.

4. Anordnung nach einem der Ansprüche 1 bis 3, **dadurch gekennzeichnet**, daß die Fenstereinstellmarke aus mehreren Bildpunkten besteht, von denen jeweils mehrere zu den angrenzenden Fenstern gehören, und daß die in den einzelnen Fenstern liegenden Bildpunkte gesondert ansteuerbar sind (Figur 7).

5. Anordnung nach Anspruch 4, **dadurch gekennzeichnet**, daß die in den einzelnen Fenstern liegenden Bildpunkte der Fenstereinstellmarke in unterschiedlicher Farbe oder Helligkeit darstellbar sind.

6. Anordnung nach einem der Ansprüche 1 bis 5, **dadurch gekennzeichnet**, daß der Bildschirm in feste Bereiche unterteilt ist und daß in mindestens einem Bereich Fenster mit einer Fenstereinstellmarke (FM3, FM4) vorhanden sind.

7. Anordnung nach einem der Ansprüche 1 bis 5, **dadurch gekennzeichnet**, daß in mindestens einem Fenster weitere Fenster mit einer weiteren Fenstereinstellmarke (FM6) vorhanden sind.

8. Anordnung nach einem der Ansprüche 1 bis 7, **dadurch gekennzeichnet**, daß die Begrenzungslinien der Fenster um die Fenstereinstellmarke schwenkbar sind.

9. Anordnung nach einem der Ansprüche 1 bis 8, **dadurch gekennzeichnet**, daß je Fenster ein Bildspeicher (BS1, BS2, BS3, BS4) vorhanden ist, in dem die im zugehörigen Fenster darzustellenden Informationen gespeichert sind, daß die Informationen zur Darstellung der Fenstereinstellmarke in einem weiteren Bildspeicher (BS0) enthalten sind, dem Adressen zuführbar sind, die durch Addition von Bildpunktadressen und einer mit dem Bedienelement veränderbaren Anfangsadresse gebildet sind, und daß die Ausgangssignale der den Fenstern zugeordneten Bildspeicher (BS1 ... BS4) in Abhängigkeit von den Ausgangssignalen des Bildspeichers (BS0) gesperrt oder zur Darstellung auf dem Bildschirm durchgeschaltet werden.

87 P 4409 E

FIG 1

FIG 2

FIG 3

FIG 4

FIG 5

FIG 6

FIG 7

FU

FE5    FM2

FE6    FE7

FB

FIG 8

FE1
FE2
FE3    FE4

FIG 11

L

FM3    FM4

FIG 9

FE1
FE2
FE3    FE4

FIG 12

FM6

FM5

FIG 10

FE1
FE2    FE4
FE3

FIG 13

FIG 14

0 281 677

87 P 4409 E